# EUROPEAN PATENT SPECIFICATION

(11) **EP 4 043 949 B1**
(45) Date of publication and mention of the grant of the patent: **27.12.2023**
(21) Application number: 20874691.7
(22) Date of filing: 15.09.2020
(51) Int. Cl.: G02F 1/1339, G02F 1/1333, G02F 1/133

(54) **DISPLAY MODULE AND ELECTRONIC DEVICE**
ANZEIGEMODUL UND ELEKTRONISCHE VORRICHTUNG
MODULE D'AFFICHAGE ET DISPOSITIF ÉLECTRONIQUE

(30) Priority: 08.10.2019 CN 201910950355
(43) Date of publication of application: 17.08.2022
(73) Proprietor: Vivo Mobile Communication Co., Ltd., Dongguan, Guangdong 523863 (CN)
(72) Inventor: LIN, Huaxin, Dongguan, Guangdong 523863 (CN); CHENG, Chuanbo, Dongguan, Guangdong 523863 (CN)
(74) Representative: Carangelo, Pierluigi
(86) International application number: PCT/CN2020/115391
(87) International publication number: WO 2021/068714

(56) References cited:
- CN-A- 109 061 934
- CN-A- 109 100 891
- CN-A- 109 143 648
- CN-A- 110 045 533
- CN-A- 110 187 567
- CN-A- 110 196 523
- CN-A- 110 794 622
- CN-U- 208 384 293
- CN-U- 208 782 856
- US-A1- 2019 243 200

## Description

### CROSS REFERENCE TO RELATED APPLICATION

This application claims priority to Chinese Patent Application No. 201910950355.X, filed on October 8, 2019 in China.

### TECHNICAL FIELD

The present invention relates to the field of display technologies, and in particular to a display module and an electronic device.

### BACKGROUND

With the progress of technologies and the development of electronic devices, users have greater demand for full-screen electronic devices. Therefore, a full screen has gradually become a development trend. Installation positions of cameras, sensors, telephone receivers, and other components are main factors that restrict the development of the full screen. Taking a camera as an example, an existing solution is as follows: a driving mechanism is disposed in a housing of an electronic device, and the driving mechanism is connected to the camera to drive the camera to enter and exit the housing of the electronic device. However, in this way, the demand for the driving mechanism leads to large internal space occupied by the driving mechanism in the housing of the electronic device.

To resolve the problem, a light-transmissive hole may be disposed on a display module of the electronic device, and the camera may be disposed towards the light-transmissive hole, to achieve camera functions. The display module includes a first substrate, a second substrate, and a plurality of support columns disposed between the first substrate and the second substrate. The support columns are distributed in a region outside the light-transmissive hole. Such structure occupies less space in the housing of the electronic device and a large screen-to-body ratio of the electronic device approaches the concept of a full screen.

However, in order not to affect light transmittance of the light-transmissive hole, no support column is disposed in the light-transmissive hole, which leads to a weak support force at the light-transmissive hole and easily causes a recess at the light-transmissive hole, affecting the optical performance of the light-transmissive hole and further reducing the performance of the electronic device.

CN 109100891A discloses a display panel and a display device. The display panel includes: a light transmitting area, a display area, and a first non-display area. The display area surrounds the light transmitting area, and the first non-display area surrounds the display area. The display panel includes a first substrate and a second substrate disposed opposite to each other; a first support portion and a first liquid crystal layer are disposed between the first substrate and the second substrate in the display area; a plurality of color filter film blocks are disposed on one side of the second substrate adjacent to the first substrate; a black matrix is disposed between each of the color filter film blocks; in the light transmitting area, at least one convex structure is disposed on the side of the second substrate adjacent to the first substrate.

CN 110045533A discloses a display substrate, a display panel and a display device. The display substrate comprises a display area, at least one reserved area, a first substrate, a plurality of first spacers and at least one circle of second spacers. The display area surrounds the reserved area; the reserved area comprises a perforated area and at least one circle of transition areas surrounding the perforated area; the first substrate comprises a first surface; the plurality of first spacers are arranged on the first surface of the first substrate and located in the display area, and comprise first supporting surfaces far away from the first substrate; the at least one circle of second spacers is arranged on the first surface of the first substrate and located in the transition areas, and comprises second supporting surfaces far away from the first substrate; a part of the display substrate located in the perforated area at least comprises the first substrate; and a circle of second spacers exists, and the distances between the second supporting surfaces of the second spacers and the first surface are greater than the distances between the first supporting surfaces of the first spacers and the first surface.

CN 109143648A discloses a display panel and a display device. The display panel comprises a hollow part, a first non-display area, a display area and a second non-display area. The display panel further comprises oppositely arranged color film substrate and array substrate, and a liquid crystal, where the array substrate comprises a first substrate, and a driving circuit layer located at one side, close to the color film substrate, of the first substrate; the color film substrate comprises a second substrate, and a black matrix and a color resistance layer both located at one side, close to the array substrate, of the second substrate; orthographic projection of the driving circuit layer and the color resistance layer is not overlapped with the hollow part, and the hollow part comprises at least one first support column located between the first substrate and the second substrate. The display panel further comprises an upper polarizer and a lower polarizer, where the upper polarizer comprises a first through hole which penetrates through the upper polarizer along a thickness direction of the upper polarizer and is corresponding to the hollow part, and the lower polarizer comprises a second through hole which penetrates through the lower polarizer along the thickness direction of the lower polarizer and is corresponding to the hollow part.

CN 109061934A discloses a display panel and a display device. The display panel comprises a first substrate and a second substrate arranged opposite to each other, and a display material layer and support pillars arranged between the first substrate and the second substrate; the display panel has a first area, a second area surrounding the first area, and a third area surrounding the second area; where the support pillar is not arranged in the first area, and the area density of the support pillars in the second area is greater than the area density of the support pillars in the third area.

### SUMMARY

The present invention discloses a display module and an electronic device to resolve the problem of low performance of the electronic device.

To resolve the foregoing problem, the following technical solutions are used in the present invention.

An electronic device is provided, which is defined in claim 1.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

The accompanying drawings described herein are used to provide further understanding of the present invention and constitute a part of the present invention. The illustrative embodiments of the present invention and descriptions thereof are used to explain the present invention, and do not constitute any improper limitation on the present invention. In the accompanying drawings:
FIG. 1 is a partial sectional view of a display module according to an embodiment of the present invention; and
FIG. 2 is a top view of the display module according to an embodiment of the present invention.

### Reference signs:

A-Region of a light-transmissive hole, B-First region, C-Second region, D-First sub-region, E-Second sub-region, F-Third sub-region, G-Fourth sub-region, 100-First substrate, 200-Second substrate, 300-First support column, and 400-Annular light-shielding component.

### DESCRIPTION OF EMBODIMENTS

To make the objectives, technical solutions, and advantages of the present invention clearer, the following clearly and completely describes the technical solutions of the present invention with reference to the specific embodiments of the present invention and the corresponding accompanying drawings.

The technical solutions disclosed by various embodiments of the present invention are described in detail below with reference to the accompanying drawings.

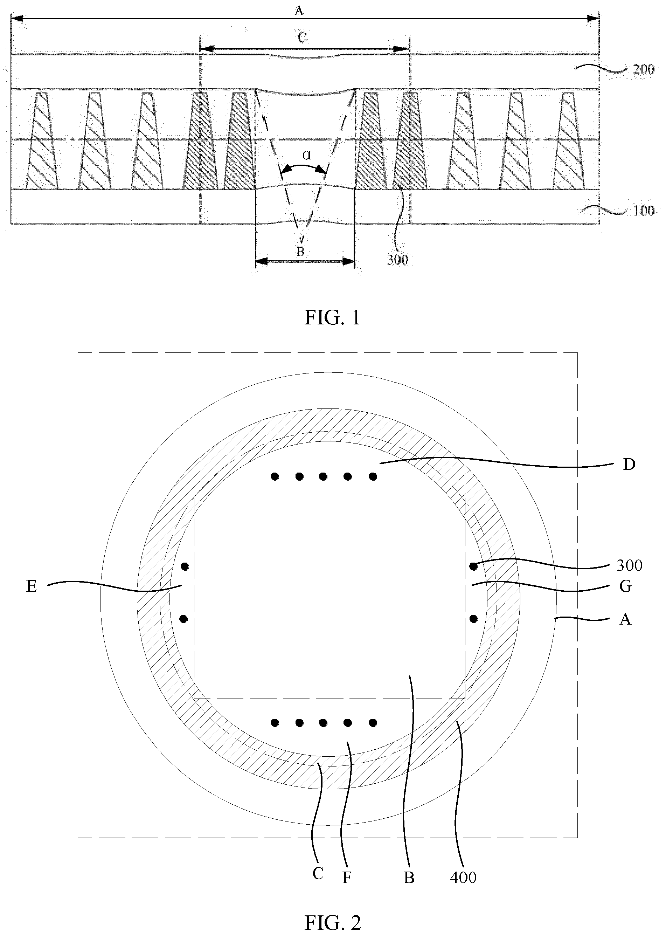

As shown in FIG. 1 and FIG. 2, embodiments of the present invention disclose an electronic device comprising a display module and an optical component. The display module has a light-transmissive hole. The light-transmissive hole has a corresponding light-transmissive hole region A, and the light-transmissive hole is disposed opposite to the optical component. The optical component may include a camera.

The display module includes a light-transmissive cover plate, a first substrate 100, a second substrate 200, and a first support column 300. The second substrate 200 is located between the first substrate 100 and a light-transmissive cover plate. The second substrate 200 has a first region B and a second region C. The second region C is a region, corresponding to a field-of-view range (a range corresponding to an angle α as shown in FIG. 1) of the optical component, on the second substrate 200. The first region B is located in the second region C. The first region B is a region, corresponding to a photosensitive region of the optical component, on the second substrate 200. Specifically, main bodies of the first substrate 100 and the second substrate 200 are glass plates, the second substrate 200 is provided with components such as an optical filter, the second substrate 200 and the light-transmissive cover plate are bonded by an optical adhesive, and the first substrate 100 is provided with components such as a thin film transistor. When the display module is a liquid crystal display module, liquid crystal is filled between the first substrate 100 and the second substrate 200. In this case, the electronic device is provided with a backlight module. The backlight module is further provided with a through hole at a position corresponding to the light-transmissive hole. In this case, the optical component is installed under the display module, which will not occupy too much display region. Therefore, the electronic device has a larger screen-to-body ratio.

The first support column 300 is disposed between the first substrate 100 and the second substrate 200. At least a part of the first support column 300 is located in a third region. The third region is a region in the second region C other than the first region B.

According to this embodiment of the present invention, the first support column 300 is disposed in a region covered by the light-transmissive hole. In addition, the first support column 300 avoids a photosensitive region, so that the structure may help to enhance a support force of the light-transmissive hole without affecting light transmittance of the light-transmissive hole, effectively preventing a recess at the light-transmissive hole. Therefore, the light-transmissive hole has better optical performance, further improving the performance of the electronic device.

Because there is an installation allowance during installation of the optical component, the first region B may be actually slightly larger than the field-of-view range of the optical component, so as to prevent vignetting when the optical component is installed. Light beyond the field-of-view range of the optical component may be shielded by silk screen on the optical filter.

In an alternative embodiment, there is a plurality of the first support columns 300. The plurality of the first support columns 300 is disposed at intervals. In this solution, the support force of the light-transmissive hole is further enhanced, further improving the optical performance of the light-transmissive hole.

Specifically, one end of the first support column 300 is fixedly connected to the first substrate 100, and the other end of the first support column 300 may be connected to the second substrate 200. In this solution, the first support column 300 is in contact with both the first substrate 100 and the second substrate 200, so that the first support column 300 strongly supports the first substrate 100 and the second substrate 200. Therefore, a support force of the light-transmissive hole becomes stronger, and then the light-transmissive hole has better optical performance.

In a preferred embodiment, one end of the first support column 300 is fixedly connected to the first substrate 100, and there is a gap between the other end of the first support column 300 and the second substrate 200. In this case, when the second substrate 200 is forced to bend, the gap can play a buffering role, so that the stresses of the first substrate 100 and the second substrate 200 become small, and the display module is not easily damaged. Alternatively, the gap between the first support column 300 and the second substrate 200 may further be filled with a buffer material. In this case, the buffer material may provide a support force for the second substrate 200. In addition, when the second substrate 200 is deformed by a pressure, the buffer material may further be elastically deformed, which can play a buffering role, thus further improving the reliability of the display module.

To enable both a strong support force and a good buffering force to be provided between first substrate 100 and the second substrate 200, in a preferred embodiment, there is a plurality of the first support columns 300, and the plurality of the first support columns 300 are displayed at intervals. One part of the first support columns 300 is in contact with both the first substrate 100 and the second substrate 200. One end of the other part of the first support column 300 is fixedly connected to the first substrate 100, and there is a gap between the other end and the second substrate 200. In this case, a strong support function and a good buffering function both provided between the first substrate 100 and the second substrate 200 further improves the performance of the display module.

In an alternative embodiment, the second region C is a circular region, the first region B is a rectangular region, and the second region C is a region where a circumscribed circle of the first region B is located, that is, the vertices of the first region B is located on a circumference of the second region C. Because a photosensitive region of a photosensitive chip in the foregoing optical component is rectangular, this solution can enable the second region C to be adapted to the photosensitive region as much as possible, thus better utilizing light and preventing stray light from entering the light-transmissive hole. Specifically, the photosensitive chip may be a complementary metal oxide semiconductor (Complementary Metal Oxide Semiconductor, CMOS) imaging chip with a 4:3 rectangular structure.

Because the second region C is a region where a circumscribed circle of the first region B is located, the third region is divided into a plurality of sub-regions. Specifically, the third region includes a first sub-region D, a second sub-region E, a third sub-region F, and a fourth sub-region G. In addition, the first sub-region D, the second sub-region E, the third sub-region F, and the fourth sub-region G are arranged around the first region B. An area of the first sub-region D is the same as an area of the third sub-region F, and an area of the second sub-region E is the same as an area of the fourth sub-region G. In order to average support forces among the sub-regions, the number of the first support columns 300 in the first sub-region D and the third sub-region F is greater than the number of the first support columns 300 in the second sub-region E and the fourth sub-region G. In this solution, as the first sub-region D and the third sub-region F have large areas, there are a great number of the first support columns 300. As the second sub-region E and the fourth sub-region G have small areas, there are a small number of the first support columns 300. In this case, support forces born by all sub-regions are relatively uniform, so the optical performance of the light-transmissive hole is better.

In an alternative embodiment, the number of the first support columns 300 in the first sub-region D is equal to the number of the first support columns 300 in the third sub-region F, and the number of the first support columns 300 in the second sub-region E is equal to the number of the first support columns 300 in the fourth sub-region G. In this solution, the numbers of the first support columns in symmetrical regions are the same, so that support forces born by symmetrical sub-regions are the same, thereby enabling support forces born by all sub-regions are more uniform, furthering leading to a stronger support force for the light-transmissive hole.

In an alternative embodiment, to prevent an edge region of the light-transmissive hole from leaking light, which affects the performance of the optical component, an annular light-shielding component 400 is further disposed in the light-transmissive hole. The annular light-shielding component 400 and the second region C have a same center. In this case, the annular light-shielding component 400 can cover the edge region of the light-transmissive hole, preventing stray light from entering the optical component. In addition, the annular light-shielding component 400 and the second region C have a same center, so that when a light beam enters a photosensitive region, the light beam will not be blocked by the annular light-shielding component 400. Therefore, the optical component can receive more light beams, further improving the performance of the optical component.

In a preferred embodiment, the display module further includes a second support column. The second column is located between the first substrate 100 and the second substrate 200, and an annular light-shielding component 400 is disposed in the light-transmissive hole, and one end of the second support column is connected to the annular light-shielding component 400. In this solution, a second support column is disposed in a region covered by the annular light-shielding component 400, so that a support force at the annular light-shielding component 400 can be improved. Therefore, a support force of the light-transmissive hole is further enhanced, and the whole light-transmissive hole is not easy to sag, so that the light-transmissive hole has better optical performance.

Specifically, the first support column 300 has a relatively strong support force but generates a relatively strong stress, and the second support column has a relatively weak support force but can alleviate a stress generated by the first support column 300.

Alternatively, the number of the first support columns 300 is greater than that of second support columns, and the second support columns are evenly distributed among the first support columns 300, so that a support force at the light-transmissive hole is relatively uniform and no great stress is generated.

Based on the display module described in any of the foregoing embodiments of the present invention, an embodiment of the present invention further discloses an electronic device. The disclosed electronic device has the display module and the optical component described in the embodiments. The display module has a light-transmissive hole, and the light-transmissive hole is disposed opposite to the optical component. In this case, the optical component is directly installed under the display module, which will not occupy too much display region. Therefore, the electronic device has a larger screen-to-body ratio.

The electronic device disclosed in the embodiments of the present invention may be a smartphone, a tablet computer, an e-book reader, or a wearable device. Certainly, the electronic device may also be another device, which is not limited in the embodiments of the present invention.

The embodiments of the present disclosure focus on describing differences between the embodiments, and different optimization features of the embodiments may be combined to form better embodiments provided that they are not contradictory. Considering brevity, details are not described herein again.

## Claims

1. An electronic device, comprising a display module and an optical component, wherein the display module has a light-transmissive hole, the light-transmissive hole is disposed opposite to the optical component, and the display module comprises a light-transmissive cover plate, a first substrate (100), a second substrate (200), and a first support column (300), wherein
the second substrate (200) is located between the first substrate (100) and the light-transmissive cover plate, and the second substrate (200) has a first region (B) and a second region (C), wherein the second region (C) is a region, corresponding to a field-of-view range of the optical component, on the second substrate (200);
wherein the first region (B) is located in the second region (C), and the first region (B) is a region, corresponding to a photosensitive region of the optical component, on the second substrate (200); and
the first support column (300) is disposed between the first substrate (100) and the second substrate (200), and at least part of the first support column (300) is located in a third region, wherein the third region is a region other than the first region (B) in the second region (C), and the first support column (300) is not located in the first region (B) to avoid the photosensitive region.

2. The electronic device according to claim 1, wherein there is a plurality of the first support columns (300), and the plurality of the first support columns (300) are disposed at intervals.

3. The electronic device according to claim 1, wherein one end of the first support column (300) is fixedly connected to the first substrate (100), and the other end of the first support column (300) is in contact with the second substrate (200).

4. The electronic device according to claim 1, wherein one end of the first support column (300) is fixedly connected to the first substrate (100), and there is a gap between the other end of the first support column (300) and the second substrate (200).

5. The electronic device according to claim 1, wherein the second region (C) is a circular region, the first region (B) is a rectangular region, and the second region (C) is a region where a circumscribed circle of the first region (B) is located.

6. The electronic device according to claim 5, wherein the third region comprises a first sub-region (D), a second sub-region (E), a third sub-region (F), and a fourth sub-region (G), wherein the first sub-region (D), the second sub-region (E), the third sub-region (F), and the fourth sub-region (G) are arranged around the first region (B), an area of the first sub-region (D) is the same as an area of the third sub-region (F), an area of the second sub-region (E) is the same as an area of the fourth sub-region (G), and the number of the first support columns (300) disposed in the first sub-region (D) and the third sub-region (F) is greater than the number of the first support columns (300) disposed in the second sub-region (E) and the fourth sub-region (G).

7. The electronic device according to claim 6, wherein the number of the first support columns (300) disposed in the first sub-region (D) is equal to the number of the first support columns (300) disposed in the third sub-region (F), and the number of the first support columns (300) disposed in the second sub-region (E) is equal to the number of the first support columns (300) disposed in the fourth sub-region (G).

8. The electronic device according to claim 1, further comprising a second support column, wherein the second support column is located between the first substrate (100) and the second substrate (200), an annular light-shielding component (400) is further disposed in the light-transmissive hole, and one end of the second support column is connected to the annular light-shielding component (400).

9. The electronic device according to claim 1, wherein an annular light-shielding component (400) is further disposed in the light-transmissive hole, and the annular light-shielding component (400) and the second region (C) have a same center.

10. The electronic device according to claim 1, wherein the optical component comprises a camera.

## Patentansprüche

1. Elektronische Vorrichtung, umfassend ein Anzeigemodul und eine optische Komponente, wobei das Anzeigemodul ein lichtdurchlässiges Loch aufweist, das lichtdurchlässige Loch gegenüber der optischen Komponente angeordnet ist und das Anzeigemodul eine lichtdurchlässige Abdeckplatte, ein erstes Substrat (100), ein zweites Substrat (200) und eine erste Tragsäule (300) umfasst, wobei
sich das zweite Substrat (200) zwischen dem ersten Substrat (100) und der lichtdurchlässigen Abdeckplatte befindet und das zweite Substrat (200) eine erste Region (B) und eine zweite Region (C) aufweist, wobei die zweite Region (C) eine Region ist, die einem Sichtfeldbereich der optischen Komponente auf dem zweiten Substrat (200) entspricht;
wobei sich die erste Region (B) in der zweiten Region (C) befindet und die erste Region (B) eine Region ist, die einer lichtempfindlichen Region der optischen Komponente auf dem zweiten Substrat (200) entspricht; und
die erste Tragsäule (300) zwischen dem ersten Substrat (100) und dem zweiten Substrat (200) angeordnet ist und sich mindestens ein Teil der ersten Tragsäule (300) in einer dritten Region befindet, wobei die dritte Region eine andere als die erste Region (B) in der zweiten Region (C) ist und die erste Tragsäule (300) sich nicht in der ersten Region (B) befindet, um die lichtempfindliche Region zu umgehen.

2. Elektronische Vorrichtung nach Anspruch 1, wobei eine erste Vielzahl der ersten Tragsäulen (300) vorliegt und die Vielzahl der ersten Tragsäulen (300) in Abständen angeordnet sind.

3. Elektronische Vorrichtung nach Anspruch 1, wobei ein Ende der ersten Tragsäule (300) fest mit dem ersten Substrat (100) verbunden ist und das andere Ende der ersten Tragsäule (300) in Kontakt mit dem zweiten Substrat (200) steht.

4. Elektronische Vorrichtung nach Anspruch 1, wobei ein Ende der ersten Tragsäule (300) fest mit dem ersten Substrat (100) verbunden ist und zwischen dem anderen Ende der ersten Tragsäule (300) und dem zweiten Substrat (200) ein Zwischenraum vorliegt.

5. Elektronische Vorrichtung nach Anspruch 1, wobei die zweite Region (C) eine kreisförmige Region ist, die erste Region (B) eine rechteckige Region ist und die zweite Region (C) eine Region ist, in der sich ein umschriebener Kreis der ersten Region (B) befindet.

6. Elektronische Vorrichtung nach Anspruch 5, wobei die dritte Region eine erste Teilregion (D), eine zweite Teilregion (E), eine dritte Teilregion (F) und eine vierte Teilregion (G) umfasst, wobei die erste Teilregion (D), die zweite Teilregion (E), die dritte Teilregion (F) und die vierte Teilregion (G) um die erste Region (B) herum angeordnet sind, eine Fläche der ersten Teilregion (D) gleich einer Fläche der dritten Teilregion (F) ist, eine Fläche der zweiten Teilregion (E) gleich einer Fläche der vierten Teilregion (G) ist und die Anzahl der in der ersten Teilregion (D) und in der dritten Teilregion (F) angeordneten ersten Tragsäulen (300) größer ist als die Anzahl der in der zweiten Teilregion (E) und in der vierten Teilregion (G) angeordneten ersten Tragsäulen (300).

7. Elektronische Vorrichtung nach Anspruch 6, wobei die Anzahl der in der ersten Teilregion (D) angeordneten ersten Tragsäulen (300) gleich der Anzahl der in der dritten Teilregion (F) angeordneten ersten Tragsäulen (300) ist und die Anzahl der in der zweiten Teilregion (E) angeordneten ersten Tragsäulen (300) gleich der Anzahl der in der vierten Teilregion (G) angeordneten ersten Tragsäulen (300) ist.

8. Elektronische Vorrichtung nach Anspruch 1, ferner umfassen eine zweite Tragsäule, wobei sich die zweite Tragsäule zwischen dem ersten Substrat (100) und dem zweiten Substrat (200) befindet, eine ringförmige lichtabschirmende Komponente (400) ferner in dem lichtdurchlässigen Loch angeordnet ist und ein Ende der zweiten Tragsäule mit der ringförmigen lichtabschirmenden Komponente (400) verbunden ist.

9. Elektronische Vorrichtung nach Anspruch 1, wobei eine ringförmige lichtabschirmende Komponente (400) ferner in dem lichtdurchlässigen Loch angeordnet ist und die ringförmige lichtabschirmende Komponente (400) und die zweite Region (C) eine gleiche Mitte aufweisen.

10. Elektronische Vorrichtung nach Anspruch 1, wobei die optische Komponente eine Kamera umfasst.

## Revendications

1. Dispositif électronique comprenant un module d'affichage et un composant optique, dans lequel le module d'affichage possède un trou transmettant la lumière, le trou transmettant la lumière est disposé à l'opposé du composant optique, et le module d'affichage comprend une plaque de recouvrement transmettant la lumière, un premier substrat (100), un second substrat (200) et une première colonne de support (300), dans lequel
le second substrat (200) est situé entre le premier substrat (100) et la plaque de recouvrement transmettant la lumière, et le second substrat (200) possède une première région (B) et une deuxième région (C), dans lequel la deuxième région (C) est une région, correspondant à une plage de champ de vision du composant optique, sur le second substrat (200) ;
dans lequel la première région (B) est située dans la deuxième région (C), et la première région (B) est une région, correspondant à une région photosensible du composant optique, sur le second substrat (200) ; et
la première colonne de support (300) est disposée entre le premier substrat (100) et le second substrat (200), et au moins une partie de la première colonne de support (300) est située dans une troisième région, la troisième région étant une région autre que la première région (B) dans la deuxième région (C), et la première colonne de support (300) n'est pas située dans la première région (B) pour éviter la région photosensible.

2. Dispositif électronique selon la revendication 1, dans lequel il existe une pluralité des premières colonnes de support (300), et la pluralité des premières colonnes de support (300) sont disposées à intervalles.

3. Dispositif électronique selon la revendication 1, dans lequel une extrémité de la première colonne de support (300) est reliée de manière fixe au premier substrat (100), et l'autre extrémité de la première colonne de support (300) est en contact avec le second substrat (200).

4. Dispositif électronique selon la revendication 1, dans lequel une extrémité de la première colonne de support (300) est reliée de manière fixe au premier substrat (100), et il existe un espace entre l'autre extrémité de la première colonne de support (300) et le second substrat (200).

5. Dispositif électronique selon la revendication 1, dans lequel la deuxième région (C) est une région circulaire, la première région (B) est une région rectangulaire, et la deuxième région (C) est une région dans laquelle un cercle circonscrit à la première région (B) est localisé.

6. Dispositif électronique selon la revendication 5, dans lequel la troisième région comprend une première sous-région (D), une deuxième sous-région (E), une troisième sous-région (F) et une quatrième sous-région (G), dans lequel la première sous-région (D), la deuxième sous-région (E), la troisième sous-région (F) et la quatrième sous-région (G) sont agencées autour de la première région (B), une zone de la première sous-région (D) est identique à une zone de la troisième sous-région (F), une zone de la deuxième sous-région (E) est la même qu'une zone de la quatrième sous-région (G), et le nombre de premières colonnes de support (300) disposées dans la première sous-région (D) et la troisième sous-région (F) est supérieur au nombre de premières colonnes de support (300) disposées dans la deuxième sous-région (E) et la quatrième sous-région (G).

7. Dispositif électronique selon la revendication 6, dans lequel le nombre des premières colonnes de support (300) disposées dans la première sous-région (D) est égal au nombre des premières colonnes de support (300) disposées dans la troisième sous-région (F), et le nombre des premières colonnes de support (300) disposées dans la deuxième sous-région (E) est égal au nombre des premières colonnes de support (300) disposées dans la quatrième sous-région (G).

8. Dispositif électronique selon la revendication 1, comprenant en outre une seconde colonne de support, dans lequel la seconde colonne de support est située entre le premier substrat (100) et le second substrat (200), un composant annulaire de protection contre la lumière (400) est en outre disposé dans le trou transmettant la lumière, et une extrémité de la seconde colonne de support est reliée au composant annulaire de protection contre la lumière (400).

9. Dispositif électronique selon la revendication 1, dans lequel un composant annulaire de protection contre la lumière (400) est en outre disposé dans le trou transmettant la lumière, et le composant annulaire de protection contre la lumière (400) et la deuxième région (C) ont un même centre.

10. Dispositif électronique selon la revendication 1, dans lequel le composant optique comprend un appareil de prise de vues.
